# FASCICULE DE BREVET EUROPEEN

(11) **EP 0 803 087 B1**
(45) Date de publication et mention de la délivrance du brevet: **02.10.2002**
(21) Numéro de dépôt: 96937401.6
(22) Date de dépôt: 06.11.1996
(51) Int. Cl.: G06F 1/00, G06F 17/60

(54) **PROCEDE DE REALISATION DE TRANSFERT SECURISE DE DONNEES SUR UN RESEAU A SERVEURS MULTIPLES**
VERFAHREN ZUR DURCHFÜHRUNG GESICHERTER DATENÜBERTRAGUNG AUF EIN NETZWERK MIT MEHREREN SERVERN
METHOD FOR SECURE DATA TRANSFER ON A MULTI-SERVER NETWORK

(30) Priorité: 10.11.1995 FR 9513327
(43) Date de publication de la demande: 29.10.1997
(73) Titulaire: Atos Services, 92800 Puteaux (FR)
(72) Inventeur: BARBEZANGE, Jean-Claude, F-41350 Saint-Gervais-la-Forêt (FR)
(74) Mandataire: de Roquemaurel, Bruno
(86) Numéro de dépôt international: FR9601742
(87) Numéro de publication internationale: WO97017646

(56) Documents cités:
- WO-A-90/02382
- TRANSACTIONS OF THE INSTITUTE OF ELECTRONICS, INFORMATION AND COMMUNICATION ENGINEERS OF JAPAN, vol. E73, no. 7, Juillet 1990, TOKYO, JP, pages 1133-1146, XP002010383 R.MORI ET AL: "Superdistribution: The Concept and the Architecture"
- PROCEEDINGS OF THE NETWORK OPERATIONS AND MANAGEMENT SYMPOSIUM, KISSIMMEE, FEB. 14 - 17, 1994, vol. 2 OF 3, 14 Février 1994, INSTITUTE OF ELECTRICAL AND ELECTRONICS ENGINEERS, pages 486-496, XP000452345 ROZENBLIT M: "SECURE SOFTWARE DISTRIBUTION"

## Description

La présente invention concerne un procédé de réalisation de transfert sécurisé de données sur un réseau à serveurs multiples.

On connaît des réseaux à serveurs multiples. Ces réseaux permettent notamment à un utilisateur d'effectuer tout d'abord une commande d'un produit ou d'un service sur un premier serveur et de valider immédiatement la commande en accédant à un serveur approprié, par exemple un serveur bancaire.

Afin de minimiser les communications à établir entre les trois parties en présence (premier serveur, second serveur et utilisateur), il est nécessaire de transférer des données en les faisant transiter par l'une des parties alors que ces données sont également destinées à une autre partie.

Dans les protocoles connus destinés à établir une relation entre un utilisateur, un premier serveur, et un second serveur, il est prévu d'établir une communication entre l'utilisateur et le premier serveur et d'échanger des informations entre le premier serveur et l'utilisateur puis de transférer les informations retenues et des données complémentaires au second serveur. Par exemple, dans le cas d'un achat de marchandise, l'utilisateur effectue un choix parmi les produits proposés par le premier serveur et celui-ci émet une facture proforma mentionnant les marchandises choisies par l'utilisateur et le prix total dû par l'utilisateur. Afin de compléter la transaction, les protocoles actuellement connus prévoient de mettre en communication le premier serveur avec le second serveur et de faire transiter par le premier serveur les informations provenant de l'utilisateur qui sont nécessaires au second serveur. Par exemple, dans le cas de l'achat de marchandise, le premier serveur, ou serveur fournisseur, se met en relation avec le second serveur, ou serveur bancaire, et l informe de la commande qui était passée par l'utilisateur. Afin que le serveur bancaire puisse prendre l'engagement d'effectuer le paiement de la commande, il est nécessaire qu'il reçoive un accord de l'utilisateur et que cet accord soit effectué en relation avec le montant qui est transmis par le serveur fournisseur. Aucune communication n'étant établie entre l'utilisateur et le serveur bancaire il est donc nécessaire de faire transiter les données transmises de l'utilisateur au serveur bancaire par le serveur fournisseur. En particulier, l'utilisateur doit transmettre au serveur bancaire le numéro de compte à débiter, éventuellement un numéro de code associé, et le montant sur lequel l'utilisateur donne un accord de débit.

Afin d'éviter que les données transmises par l'utilisateur au serveur bancaire ne soient falsifiées ou simplement divulguées lors de leur passage par le serveur fournisseur, il est nécessaire de sécuriser le transfert des données.

Dans les réseaux connus, la sécurisation du transfert de données est effectuée en chargeant préalablement à la transaction un algorithme de cryptage dans la mémoire de l'appareil de l'utilisateur, cet algorithme de cryptage étant destiné à sécuriser les données qui seront transmises au serveur bancaire par l'intermédiaire du serveur fournisseur lors de la transaction. Le chargement de l'algorithme de cryptage chez l'utilisateur occupe une partie des moyens de stockage de l'appareil de l'utilisateur. En outre, ce chargement doit être effectué préalablement à toute transaction et implique un temps d'attente non négligeable pour l'utilisateur.

Il est également connu du document WO 90/02382 un protocole comportant les étapes de fournir d'un premier serveur à un utilisateur des documents cryptés et de faire décrypter les documents par l'utilisateur au moyen d'une carte de décryptage implantée chez l'utilisateur et d'une clé fournie par un second serveur assurant une comptabilisation des documents décryptés. Comme dans le cas précédent, ce protocole implique chez l'utilisateur des mesures préparatoires importantes.

Un but de l'invention est de proposer un procédé de réalisation de transfert sécurisé de données sur un réseau à serveurs multiples dans des conditions plus rapides et donc moins coûteuses que celles actuellement proposées.

En vue de la réalisation de ce but, on propose selon l'invention un procédé comportant les étapes d'implanter dans un premier serveur et dans un second serveur un algorithme de sécurisation de données, d'effectuer un échange de données entre l'utilisateur et le premier serveur, de transmettre du premier serveur à l'utilisateur des données dont une partie est en clair et une autre partie est sécurisée au moyen de l'algorithme de sécurisation, et de transmettre de l'utilisateur au second serveur au moins la partie des données, sécurisée par l'algorithme de sécurisation.

Ainsi, l'impiantation de l'algorithme de sécurisation dans le premier serveur et dans le second serveur étant préalable aux échanges entre l'utilisateur et le premier serveur, l'utilisateur ne subit aucune attente ou contrainte de chargement préalable pour l'établissement de la transaction. De plus, les données sécurisées transmises du premier serveur à l'utilisateur peuvent être immédiatement retransmises au second serveur. En outre, l'algorithme de sécurisation de données implanté dans le premier serveur et le second serveur peut être commun à un grand nombre d'utilisateurs, de sorte que le temps d'implantation de l'algorithme de sécurisation est négligeable par rapport au nombre de transactions effectuées au moyen de celui-ci, en particulier lorsque l'algorithme de sécurisation est du type dit symétrique, c'est-à-dire utilisant une même clé pour les deux interlocuteurs.

Selon une version avantageuse de l'invention, le procédé comporte en outre l'étape de transmettre un acquittement sécurisé du second serveur au premier serveur par l'intermédiaire de l'utilisateur. Le premier serveur est ainsi totalement informé de l'acceptation de la transaction par le second serveur.

D'autres caractéristiques et avantages. de l'invention apparaîtront à la lecture de la description qui suit d'un mode de mise en oeuvre préféré non limitatif de l'invention en relation avec la figure unique ci-jointe qui illustre schématiquement le procédé selon l'invention.

En référence à la figure, le procédé selon l'invention est destiné à être mis en oeuvre sur un réseau comportant au moins un premier serveur 1 et un second serveur 2 avec lesquels au moins un utilisateur, schématisé par un ordinateur 3, est destiné à entrer en relation.

Préalablement à tout échange entre un utilisateur et les serveurs du réseau, on implante dans le premier serveur 1 et dans le second serveur 2 un algorithme de sécurisation de données illustré par une flèche en pointillés épais 4. L'algorithme de sécurisation de données est par exemple un algorithme cryptographique du type DES utilisant des clés détenues par le premier serveur et le second serveur.

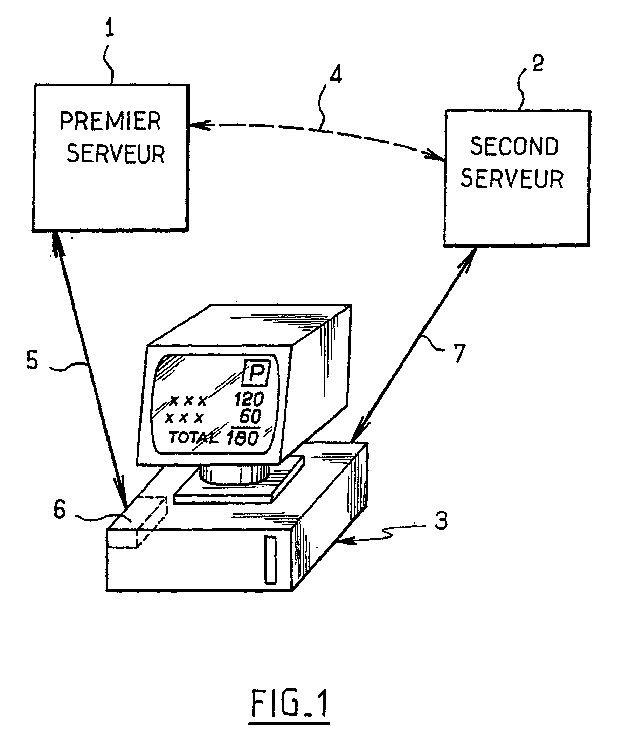

Lorsque l'utilisateur 3 souhaite effectuer une transaction avec le premier serveur 1, ou serveur-fournisseur, un échange symbolisé par la flèche en traits épais 5 est établi entre l'utilisateur et le premier serveur. L'utilisateur peut ainsi consulter le menu du premier serveur et sélectionner les articles dont il souhaite faire l'acquisition. Une facture proforma est alors établie par le premier serveur et envoyée à l'utilisateur, par exemple pour affichage sur l'écran de celui-ci comme illustré sur la figure 1. Les données transférées du serveur-fournisseur à l'utilisateur comprennent des données en clair destinées à l'utilisateur et des données cryptées au moyen de l'algorithme de sécurisation qui y sont mises en mémoire chez l'utilisateur, par exemple dans la mémoire de gestion de l'écran 6. Les données sécurisées sont par exemple le nom de l'utilisateur qui a été préalablement communiqué par l'utilisateur au serveur et le montant de la facture proforma. Après vérification de la facture qui lui a été adressée, l'utilisateur déclenche le paiement, par exemple en activant une fonction P apparaissant sur l'écran de l'ordinateur ou en déclenchant celle-ci par le clavier de l'ordinateur. Un échange symbolisé par la flèche en traits épais 7 sur la figure est alors établi entre l'utilisateur et le second serveur, ou serveur bancaire, et les données sécurisées par le premier serveur sont transmises de l'utilisateur au second serveur. Les données sécurisées ainsi transmises sont, de préférence, accompagnées par des données transmises par l'utilisateur lui-même, par exemple son nom, son numéro de compte et le montant de la facture proforma qui est affiché sur son écran afin que le second serveur puisse vérifier que le montant qui est inclus dans les données sécurisées envoyé par le premier serveur et le montant accepté par l'utilisateur sont bien en concordance. La transmission de ces informations peut être déclenchée automatiquement par un programme contenu dans l'appareil de l'utilisateur.

La sécurisation des données est, par exemple, obtenue en réalisant un scellement et une signature au moyen d'un algorithme cryptographique utilisant des clés détenues par le premier serveur et le second serveur.

De préférence, après vérification des données qui lui ont été transmises, le second serveur transmet un acquittement sécurisé au premier serveur par l'intermédiaire de l'utilisateur, cet acquittement étant en outre affiché en clair sur l'écran de l'utilisateur.

On remarquera que le procédé selon l'invention présente de nombreux avantages par rapport aux systèmes existants. Le premier avantage consiste en un gain de temps pour l'utilisateur en raison du fait que l'algorithme de sécurisation est implanté dans le premier serveur et le second serveur avant toute mise en communication de l'utilisateur avec le premier serveur de sorte que l'utilisateur engage immédiatement la transaction qui lui est propre dès l'établissement de la communication. Le procédé selon l'invention est également avantageux pour le premier serveur qui contrairement aux systèmes antérieurs n'a plus à établir de communication avec le second serveur pour assurer une transaction complète, cette mise en communication étant assurée par l'utilisateur. Enfin, la mémoire de l'utilisateur n'est plus encombrée par l'algorithme de sécurisation qui était antérieurement implanté chez l'utilisateur préalablement à la transaction et la place occupée par l'algorithme de sécurisation dans le premier serveur et le second serveur est relativement minime par rapport au volume des transactions gérées par le premier serveur et le second serveur.

Bien entendu, l'invention n'est pas limitée au mode de mise en oeuvre décrit et on peut y apporter des variantes de réalisation sans sortir du cadre de l'invention tel que défini par les revendications. En particulier bien que l'invention ait été décrite à propos d'un achat de marchandise avec un serveur fournisseur et un serveur bancaire, l'invention s'applique à toute relation entre un utilisateur et plusieurs serveurs sur un même réseau.

De même bien que l'invention ait été décrite en relation avec un procédé dans lequel les données sécurisées sont tout d'abord transférées du premier serveur à une mémoire de l'utilisateur puis de cette mémoire au second serveur, on peut prévoir d'effectuer un transfert direct du premier serveur au second serveur au moyen d'une interface associée à la fonction déclenchant la mise en communication de l'utilisateur avec le second serveur.

## Revendications

1. Procédé de réalisation de transfert sécurisé de données sur un réseau à serveurs multiples, **caractérisé en ce qu'**il comprend les étapes d'implanter dans un premier serveur (1) et un second serveur (2) un algorithme de sécurisation de données, d'effectuer un échange de données entre l'utilisateur (3) et le premier serveur (1), de transmettre du premier serveur (1) à l'utilisateur (3) des données dont une partie est en clair et une autre partie est sécurisée au moyen de l'algorithme de sécurisation, et de transmettre de l'utilisateur (3) au second serveur (2) au moins la partie des données, sécurisée par l'algorithme de sécurisation.

2. Procédé selon la revendication 1, **caractérisé en ce que** les données sécurisées transmises au second serveur (2) sont tout d'abord stockées dans une mémoire (6) de l'utilisateur (3), puis transférées de cette mémoire au second serveur.

3. Procédé selon la revendication 1, **caractérisé en ce que** les données sécurisées transmises par l'utilisateur au second serveur sont accompagnées de données transmises par l'utilisateur lui-même.

4. Procédé de réalisation de transfert sécurisé selon la revendication 1, **caractérisé en ce que** les données sont sécurisées en réalisant une signature au moyen de l'algorithme de sécurisation utilisant des clés détenues par le premier serveur et le second serveur.

5. Procédé de réalisation de transfert sécurisé selon la revendication 1, **caractérisé en ce qu'**il comporte en outre l'étape de transmettre un acquittement sécurisé du second serveur (2) au premier serveur (1) par l'intermédiaire de l'utilisateur (3).

6. Procédé de réalisation de transfert sécurisé selon la revendication 5, **caractérisé en ce que** l'acquittement est sécurisé en réalisant une signature au moyen de l'algorithme de sécurisation utilisant des clés détenues par le premier serveur et le second serveur.

## Claims

1. Process for effecting secure transfer of data over a multi-server network, **characterized in that** it comprises the steps of installing a data security algorithm in a first server (1) and a second server (2) , of performing an exchange of data between the user (3) and the first server (1), of transmitting data, part of which is unenciphered and another part of which is made secure by means of the security algorithm, from the first server (1) to the user (3), and of transmitting at least the part of the data which is made secure by the security algorithm from the user (3) to the second server ( 2 ) .

2. Process according to Claim 1, **characterized in that** the secure data transmitted to the second server (2) are firstly stored in a memory (6) of the user (3), then transferred from this memory to the second server.

3. Process according to Claim 1, **characterized in that** the secure data transmitted by the user to the second server are accompanied by data transmitted by the user himself.

4. Process for effecting secure transfer according to Claim 1, **characterized in that** the data are made secure by effecting a signature by means of the security algorithm using keys held by the first server and the second server.

5. Process for effecting secure transfer according to Claim 1, **characterized in that** it furthermore comprises the step of transmitting a secure acknowledgement from the second server (2) to the first server (1) by way of the user (3) .

6. Process for effecting secure transfer according to Claim 5, **characterized in that** the acknowledgement is made secure by effecting a signature by means of the security algorithm using keys held by the first server and the second server.

## Patentansprüche

1. Verfahren zur Reallsierung einer geschützten Datenübertragung in einem Netzwerk mit mehreren Servern,
**dadurch gekennzeichnet,**
**daß** es die Schritte des lmplementierens eines Datensicherheitsalgorithmusses in einem ersten Server (1) und in einem zweiten Server (2), des Durchführens eines Datenaustausches zwischen dem Benutzer (3) und dem ersten Server (1), des Übermittelns von Daten vom ersten Server (1) an den Benutzer (3), deren einer Bereich verständlich ist und deren anderer Bereich über ein Mittel des Sicherheitsalgorithmusses geschützt ist, und des Übermittelns mindestens des durch den Sicherungsalgorithmus geschützten Datenbereichs vom Benutzer (3) an den zweiten Server (2) aufweist.

2. Verfahren nach Anspruch 1, **dadurch gekennzeichnet, daß** die übermittelten geschützten Daten auf dem zweiten Server (2) zuerst in einem Speicher (6) des Benutzers (3) gespeichert, danach von diesem Speicher an den zweiten Server übermittelt werden.

3. Verfahren nach Anspruch 1, **dadurch gekennzeichnet, daß** die über den Benutzer an den zweiten Server übermittelten geschützten Daten von vom Benutzer selbst übermittelte Daten begleitet werden.

4. Verfahren zur Realisierung einer geschützten Datenübertragung nach Anspruch 1, **dadurch gekennzeichnet, daß** die Daten durch eine Signatur mittels eines Sicherheitsalgorithmusses geschützt werden, welcher beim ersten Server und beim zweiten Server bewahrte Schlüssel verwendet,

5. Verfahren zur Realisierung einer geschützten Datenübertragung nach Anspruch 1, **dadurch gekennzeichnet, daß** es schließlich den Schritt des Übermittelns einer geschützten Quittierung vom zweiten Server (2) Ober den dazwischenliegenden Benutzer (3) an den ersten Server (1) umfaßt.

6. Verfahren zur Realisierung einer geschützten Datenübertragung nach Anspruch 5, **dadurch gekennzeichnet, daß** die Quittierung durch Ausführen einer Signatur mittels des Sicherheitsalgorithmusses geschützt wird, der beim ersten Server und beim zweiten Server bewahrte Schlüssel verwendet.
